# EUROPEAN PATENT APPLICATION

(11) **EP 4 663 025 A1**
(43) Date of publication of application: **17.12.2025**
(21) Application number: 25183125.1
(22) Date of filing: 16.06.2025
(51) Int. Cl.: A23F 5/26, A23F 5/30, A23L 5/43, A23L 33/105, A61K 36/74

(54) **METHOD FOR PRODUCING A NATURAL COLORANT FROM COFFEE SILVER SKIN**

(30) Priority: 14.06.2024 GR 20240100438
(71) Applicant: Aristotle University of Thessaloniki - E.L.K.E. (Eidikos Logariasmos Kondilion Erevnas), 54636 Thessaloniki (GR)
(72) Inventor: MOURTZINOS, Ioannis, 54642 Thessaloniki (GR); KYRIAKOUDI, Anastasia, 54453 Thessaloniki (GR); LOUKRI, Anastasia, 54351 Thessaloniki (GR); CHRISTAKI, Stamatia, 54453 Thessaloniki (GR); KLIMANTAKIS, Konstantinos, 54634 Thessaloniki (GR); VETSOS, Anastasios, 54351 Thessaloniki (GR)
(74) Representative: Petsis, Christos

(57) **Abstract**

An extraction of brown colorants from coffee silver skin is carried out using ultrasound-assisted extraction and water as an environmentally friendly solvent. Extraction efficiency is achieved by optimizing the factors of duration, temperature, amplitude and solvent-to-solid ratio. The characteristics of the final product are determined by the application of optimum conditions during the extraction of brown colorants. The product of the present invention finds applications as a natural brown colorant in food and beverage formulations, as its properties are comparable to commercial caramel color E150d.

## Description

### Field of the invention

The present invention relates to a method for producing a natural colorant from coffee silver skin comprising the extraction of brown coloring agents from coffee silver skin, based on the use of ultrasound-assisted extraction and water as a solvent.

### Background of the invention

Regarding its composition, coffee silver skin contains a large amount of polysaccharides, mainly cellulose, hemicellulose and lignin. Xylose, galactose, arabinose and mannose are the main monosaccharides found in this plant material. Dietary fibers constitute almost 60-80%. In addition, a significant amount of protein -around 18%- along with small percentages of ash and fat have been reported in coffee silver skin. Finally, silver skin is a significant source of bioactive compounds, such as caffeine and polyphenols. Its composition varies depending on the type of coffee beans, their geographical origin and the roasting conditions.

Moreover, silver skin is considered an important source of brown colorants, melanoidins, which are heterogenous nitrogen-containing high molecular weight compounds. These compounds are the result of so-called Maillard reactions that take place during the coffee beans roasting process. It is estimated that their concentration in the silver skin ranges from 17% to 23%. Due to the complexity of their structure, yet not fully ascertained so far, melanoidin extracts cannot be characterized in terms of concentration, so the absorbance of the extracts at a wavelength of 420 nm is used as a browning index representing roughly the amount of melanoidins in the extract.

According to literature data, silver skin is usually valorized for the recovery of bioactive components, such as chlorogenic acid and caffeine. Melanoidins extraction from silver skin is not as common, whereas in these cases conventional techniques that require high temperature are employed, thus increasing the process duration and cost.

### Prior art

Coffee silver skin has gained special attention owing to its rich composition : it can be used notably for energy production, for the development of packaging materials, as well as a substrate for the growth of microorganisms Also, based on the presence of bioactive components, the silver skin has been studied as an ingredient for the development of biofunctional foods (Arya et al., 2022; Bondam et al., 2022; Garcia & Kim, 2021).

US20220347083A1 discloses a method for extracting melanoidins from food sources, esp. spent coffee grounds, for use in cosmetic applications. The process involves treating the material with an aqueous solution at a pH greater than 7, followed by physical separation, fractionation based on molecular weight, and dehydration. The resulting melanoidins, which have a weight average molecular weight (Mw) ranging from 200 Daltons to 300 kDa, are then incorporated into various cosmetic compositions. These melanoidins offer potential benefits such as antimicrobial activity and they are a renewable resource, as well as free of caffeine and other common cosmetic pigments like carbon black and azo dyes.

WO 2013/004873 discloses a method for extracting antioxidants from coffee silver skin. The extraction process is environmentally friendly, avoiding organic solvents -(using *preferably* subcritical water instead)-. The resulting coffee silver skin extract is rich in chlorogenic acid and caffeine, boasting high antioxidant properties. This extract has various applications, including its use in anti-aging cosmetics, functional foods, and as a natural preservative due to its antioxidant capabilities. It includes a water extraction stage, to optimize the extraction of antioxidant compounds, specifically chlorogenic acid and caffeine. The next stage refers to the technique of subcritical water extraction. This stage may occur at temperatures between 50 and 200°C with enough pressure to keep the water in a liquid state. Preferred conditions are approximately 50°C and a pressure of 1500 psi, without prior grinding or pulverization of the silver skin.

In literature, one of the uses of silver skin is to create extracts to obtain bioactive ingredients. In this regard, an article GRXP2025099 of Fučkar et al., published 18.5.2023 discusses the use of ultrasound-assisted extraction to isolate proteins and polyphenols from coffee silver skin referred to hereinafter as UAE resp. CS. The research aimed to optimize UAE conditions to maximize yields and it analyzed the environmental impact of the process. The study found that the best results for polyphenol extraction were achieved at 75% amplitude and 9 minutes, while the optimal conditions for both polyphenols and proteins were 100% amplitude and 9 minutes. The most abundant amino acids in the protein extracts were identified and the study concluded that UAE is a promising technology for sustainable extraction. The research supports the goals of sustainable development by reducing waste and using efficient, non-thermal technologies.

Furthermore, the process of extracting phenolics from coffee silver skin was studied (Zhang et al., 2022). The extraction process disclosed in the article involves ultrasound-assisted extraction UAE to enhance the extraction of phenolic compounds from the silver skin CS. The procedure uses a probe-type sonicator for processing, leading to significant tissue damage, as observed through scanning electron microscopy referred to as SEM. Results showed that UAE significantly increased the extraction rate, yielding high amounts of total phenolic content, referred to as TPC, in a short time (30 min), with a recovery of 97,6%, respectively, compared to conventional extractions lasting 24 h. Moreover, the extracts contained amounts of free amino acids, highlighting the potential of these by-products as sources of valuable nutrients.

GRXP2025098 of Yu, J. et al. published 13.1.2023 relates to "extraction methods of melanoidins and its potential as a natural pigment" mentioning that in last years, consumers pay more attention to natural and body-friendly pigments. There is a great tendency to promote natural dyes instead of synthetics. But it discloses that instability of these natural pigments has many negative impacts on application. However, melanoidins, high molecular weight brown nitrogenous polymers formed at the end of the Maillard reaction, are increasingly studied by scholars ascribe to its enormous biological activity. They are normally formed during heat processing of food. This brown-colored compound may be a natural pigment due to its desirable dark brown and biological activity, what is more, its ability is superior to other natural pigments.

GRXP2025097 of Dauber C. et al. published 4.12.2023 is about cookies enriched with coffee silverskin powder and coffee silverskin ultrasound extract to enhance fiber content and antioxidant properties discloses that coffee is one of the most significant beverages consumed worldwide. However, the substantial production and consumption of coffee has led to the generation of large amounts of by-products, such as coffee silverskin referred to as CS. The first objective was to study the ultrasound-assisted extraction (UAE) conditions from CS according to a simple factorial design, in order to obtain natural extracts as a source of polyphenols and caffeine with high antioxidant activity. The second objective was to include CS powder (CSP) or ultrasound CS extract (UCSE) in the elaboration of cookies, in order to obtain an enriched food product with potential health benefits for consumers.

GRXP2025096 of Tores de la Cruz, S. et al. of 12.02.2019 is about "An assessment of the bioactivity of coffee silverskin melanoidins" esp. on browning reactions in foods and its impact on nutrition, esp. safety and health. It discloses that melanoidins present in coffee silverskin, the only by-product of the roasting process, are formed via the Maillard reaction. The exact structure, biological properties, and mechanism of action of coffee silverskin melanoidins remain unknown. Melanoidins were obtained from an aqueous extract of Arabica coffee silverskin (WO2013004873A1) and was isolated through ultrafiltration (>10 kDa). The isolation protocol was optimized, and the chemical composition of the high molecular weight fraction (>10 kDA) was evaluated, by analyzing the content of protein, caffeine, chlorogenic acid, and the total dietary fiber. In addition, the structural analysis was performed by infrared spectroscopy. Antioxidant properties were studied in vitro, and the fiber effect was studied in vivo. Melanoidins were administered to animals in the drinking water at a dose of 1 g/kg. In conclusion, the isolation process was effective in obtaining a high molecular weight fraction, composed mainly of dietary fiber, including melanoidins, with in vitro antioxidant capacity and in vivo dietary fiber effects.

Melanoidins are widely distributed in foods and are part of our daily diet. These compounds are found in coffee, bakery products, boiled potatoes, cocoa, toasted barley, beer, caramel, and sweet wine. Coffee and bakery products are the most important sources of melanoidins. Melanoidins are high molecular weight brown polymeric compounds generated during the last stage of the Maillard reaction. Melanoidins are responsible for color, taste, and texture of foods submitted to high temperatures. Extraction of melanoidins can be carried out by different techniques. Dialysis and diafiltration with membranes from the ultrafiltration scale are the most frequently used procedures for elimination of low molecular weight compounds and recovery of an enriched fraction of high molecular weight compounds, such as polysaccharides, proteins, and melanoidins. The most used technique for the isolation of coffee melanoidins is ultrafiltration, with 10 kDa molecular weight cut-off membranes. Ultrafiltration presents various advantages, such as treatment of huge volume extracts for a short time, no phase change, no use of solvents, complete physical separation, and easy industrial scaling.

Coffee silverskin may be an important source of melanoidins. Coffee silverskin is the tegument of the outer layer of the coffee bean, representing approximately 4,2 % (w/w) of the coffee cherry and it is the only by-product during coffee roasting step. During the roasting process, melanoidins are transformed into a more complex structure, where low molecular weight compounds, such as chlorogenic acids, bind non-covalently to the initial skeleton, constituted by carbohydrates, dietary fiber, polyphenols, and proteins.

Melanoidins content is determined with caramel (E-150d) used as reference. It is observed that CSE (coffee silverskin extract) absorbs at wavelengths ranging between 400-450 nm, which might be due to the presence of melanoidins, also described to absorb in this wavelength interval. Melanoidins fraction obtained after diafiltration shows absorption in the whole spectrum ranging from 270-450 nm, which might indicate the presence of melanoidins and traces of caffeine. Caramel (E-150d) has a similar spectrum to that observed in melanoidins. The latter are soluble anionic polymeric compounds that are brown in color. These compounds have a molecular weight > 10 kDa and absorb in the interval of 400 and 450 nm.

### Aim of the invention

The present invention aims at obtaining melanoidins in such a way that by optimizing the ultrasound extraction process, the resulting product is considerably upgraded, for becoming unique, with outstanding properties. The production of a new pigment after this treatment provides the uniqueness elements to the present invention. Furthermore, the use of the present product is relevant to the food and cosmetic industries. Overall, the aim of the present invention is the valorization of coffee silver skin for the recovery of brown colorants.

### Summary of the invention

This aim is achieved by performing probe-type ultrasound-assisted extraction in an aqueous silver skin solution and by optimizing process-related factors, such as duration, temperature, amplitude, and solvent-to-solid ratio. The recovered melanoidins, as brown colorants, can be applied as natural brown colorants in food and beverage industries, similar to caramel color.

According to the present invention, there is proposed a method for the extraction of brown colorants consisting of melanoidins, from raw material consisting of coffee silverskin of coffee beans, carried out with a predetermined set of process parameters, wherein said silverskin is mixed with solvent means, which generates a solution, wherein said solution thus obtained is filtered, wherein solid residues are removed. The method according to the invention is remarkable in that an ultrasound-assisted extraction, esp. of the probe-type, is carried out with a solvent means esp. environmentally friendly, which is selected as water, according to the following steps comprising
- a first step consists of a pulverization of said coffee silver skin yielding a particle size reduction through which coffee silverskin powder is obtained,
- in a further step, said silverskin powder is mixed with said solvent means according to a specific solvent-to-solid ratio, which generates an aqueous solution,
- whereas during the extraction, said process parameters comprising the amplitude and temperature are kept constant,
- in that the abovementioned process steps produce an aqueous extract of melanoidins that is generated resp. yielded by the abovementioned process steps;
the method esp. also comprises a determination step wherein a set of color coefficients L*, a*, b* thereof is determined in value as well as the absorbance ABS that is determined at a certain wavelength, esp. of about 420 nm, wherein the measurements of color factors (CIE Lab*) and absorbance at 420 nm are incorporated as an integral part of the extraction method, wherein the measurement of these indicators is performed during or immediately after said filtration step, to confirm that the extract meets specific quality standards.

Measurements of color factors (CIE Lab*) and absorbance at 420 nm are thus incorporated as an integral part of the extraction method, in the meaning that they are not an independent identification step in this context of the main invention. The measurement of these indicators is not performed here as an analysis of the final product, but instead, it is performed during or right after filtration to confirm that the extract meets specific quality standards.

Said method is thus remarkable in that it comprises the following steps: a first stage consists of pulverization from which coffee silver skin powder is obtained. In the second stage, said silver skin powder is mixed with water in a specific solvent-to-solid ratio. During extraction, the amplitude and temperature parameters remain constant. The final solution is filtered to remove solid residues and the color coefficients L*, a* and b* as well as the absorbance ABS esp. at 420 nm are determined.

The values obtained for the said set of color coefficients L*, a*, b* and for the absorbance at a wavelength of 420 nm are particularly as follows: L* is comprised in a range between 32-40 , a* between 7 and -13, resp. b* between 29 and -35, esp. wherein L* = 38 ± 1, a*=10 ± 1, b*=33 ± 1 and absorbance ABS at 420 nm between 2,1 and 3, in particular 2,7 ± 0,1 respectively.

The present invention focuses on the valorization of coffee silver skin that is constituted by a thin piece of coffee beans outer layer, which is the main by-product of roasting. Silver skin represents 4,2% of the total coffee bean weight and it is estimated that approximately 1 ton of silver skin is produced for every 120 tons of roasted coffee. Despite being the least abundant of the coffee industry by-products, its availability and easy handling due to the low moisture content have raised the interest regarding its exploitation and application in different sectors.

On the other hand, ultrasound-assisted extraction enables the reduction of extraction time, while achieving the necessary high temperature for the extraction of melanoidins just as effectively. Therefore, in the present invention, a probe-type ultrasound system is used in combination with water at high temperatures, in order to extract the brown colorants of interest. Thanks to this method according to the invention, the advantages of a short and efficient extraction procedure are combined.

The invention as defined above is not disclosed in US20220347083A1 cited above, since it is based on the use of membranes to obtain melanoidins which is technically a different process from the one defined in the invention. The production of the final product for cosmetic use disclosed therein is carried out after fractionation of melanoidins with a molecular weight of 200 daltons-300 kDa and the addition of at least one auxiliary agent selected from the group consisting of: wetting agents, swelling agents, fluidizers, pH regulators, surfactants, thickening agents, antimicrobial agents and perfumes. In the present invention however, the use of such agents is not represented. Instead, the differentiation of the invention is based on the use of ultrasound as well as the characterization of the resulting extract in terms of the colorimetric indices L*, a* and b* and absorbance at 420 nm.

Similarly, the invention is not disclosed in WO2013/004873, as it uses different production techniques, focusing on supercritical fluid technologies to produce extracts containing chlorogenic acid and caffeine. The present invention uniquely employs ultrasound under specific conditions with post-pulverization, resulting in distinct final product characteristics, wherein the use of ultrasound under specific conditions after is pulverization of the sample makes it unique. Said document however relates to the production of an extract by a different method, whose final characteristics differ from the present invention. The composition of the final extract refers to chlorogenic acid and caffeine, using supercritical fluid technologies under certain pressure and temperature conditions. This is a holistically different treatment of the sperm material. Finally, the extract obtained therewith is characterized in terms of its use in cosmetics.

GRXP2025096 yet discloses some of the features above, not enough though for achieving the more efficient extraction of melanoidins from the silverskin of coffee beans which is aimed at with the present invention.

GRXP2025097 yet discloses an additional feature of the invention as defined above pointing out that the extraction rate increased with the extraction time and the maximum yield is obtained after 20 or 30 minutes of the ultrasound treatment referred to therein, further mentioning that higher values could even be obtained than the ones reported using an ultrasound assisted extraction (UAE) in an aqueous medium, which therefore doesn't appear to be promoted therein. In the subject invention however, this means is used in the method of the invention as an environmentally friendly solvent means.

Likewise, in GRXP2025098, wherein solvent extraction is promoted esp. ethanol solutions, whereas it remains silent on pulverization resp. powder forming as featured in the method according to the invention.

According to a particular embodiment of the extraction method of the invention, said coffee silverskin has plant tissues contained in said coffee beans, wherein said coffee beans are roasted, thereby generating so-called Maillard reactions, wherein said brown colorants comprise one of the end-products of said Maillard reactions, wherein during said ultrasound-assisted extraction, the vegetative tissues of the coffee silverskin are ruptured, resulting in the release of the melanoidins into said aqueous solution. The extraction process parameters, further comprising duration and solvent-to-solid ratio, are determined and selected after process optimization resp. completion, wherein they are kept constant during the extraction.

The abovementioned process steps produce an aqueous extract of melanoidins, wherein its absorbance is recorded at said wavelength in the UV-VIS (visible) spectrum, representing a browning index that is based on the concentration of melanoidins.

The extraction of brown colorants from coffee silver skin is carried out employing ultrasound-assisted extraction and water as the solvent extraction. The aforementioned brown colorants from coffee silver skin called melanoidins are comprised in one of the end-products of Maillard reactions, that take place during the roasting of coffee beans. During the ultrasound-assisted extraction, the plant tissues of the coffee silver skin are ruptured, resulting in the release of the melanoidins into the aqueous solution. The determined process parameters, esp. of extraction duration, temperature, amplitude and solvent-to-solid ratio are selected after process optimization and remain constant during the extraction. The process results in an aqueous extract of melanoidins and its absorbance is recorded at a wavelength of 420 nm, in the UV-Vis spectrum, representing a browning index that is based on the concentration of melanoidins. In addition, color coefficients are determined using the CIE L*a*b* scale, as indicators of extract quality. Then, the aqueous extract of melanoidins is subjected to freeze-drying. The resulting dry powder is redissolved in water and the absorption measurement of the new solution at a wavelength of 610 nm is performed. This represents an index of color intensity of caramel color E-150d. Finally, the aqueous extract of melanoidins is compared with the corresponding aqueous solution of caramel color E-150d.

According to a more particular embodiment of the method of the invention, in addition, said color coefficients are determined using a so-called CIE L*a*b* scale, as indicators of extract quality, after which the aqueous extract of said melanoidins is subjected to freeze-drying generating a dry powder, wherein said dry powder is redissolved in water and the absorption measurement of the new solution is performed at another wavelength esp. of 610 nm, representing an index of color intensity of another material serving as reference.

According to a still more particular embodiment of the method of the invention, said pulverization with powder recovery is followed by the addition of a certain amount of powder to an aqueous solution with a defined ratio of water-to-silverskin powder;
the water is pre-heated, ultrasound pulses are applied with a certain amplitude during extraction, the extraction duration is set, and after the process is thus completed, the resulting extract is filtered and subjected to centrifugation under the action whereof solid material is removed, yielding a final extract consisting of a clear brown extract.

The process of extraction method is thus completed as a whole.

According to a quantified embodiment of the method of the invention, said pulverization with powder recovery is followed by the addition of an amount of powder to an aqueous solution with a defined ratio of water-to-silverskin powder, ranging from 100:1 to 1:1 mL/g; the water is pre-heated up to 65-80°C; ultrasound pulses are applied with the amplitude during extraction the intensity whereof is set to range from 50 to 70%; the extraction duration is set to about 10 min.; more particularly, the conditions for said process parameters of the extraction of melanoidins are: 10:1 mL/g solvent-to-solid ratio, 50% amplitude, 10 minutes extraction duration and 75°C extraction temperature. The proposed method thus requires as a first step the pulverization of silver skin as raw material for particle size reduction and powder recovery. The intensity of ultrasound pulses in terms of amplitude, during extraction ranges from 50 to 70%. After the process is completed, the resulting extract is filtered and subjected to centrifugation for solid material removal, so a clear brown extract is obtained.

The combination of (a) pulverization of the spermoderm by-product, (b) ultrasonic extraction in water under controlled intensity (50-70%), duration (10') and temperature (75°C), (c) filtration, (d) CIE Lab* + ABS@420 nm control, is not disclosed by the cited documents referred to above. By optimizing the ultrasound extraction process, the resulting product is considerably upgraded, for becoming unique, with outstanding properties. The production of a new pigment after this treatment provides the elements of uniqueness to the present invention.

According to a yet more particular embodiment of the method of the invention, the following parameters are determined in the said final extract:
- the color coefficients based on the CIE L*a*b* scale, as quality indicators, wherein a colorimeter is used, esp. portable,
- the absorbance of the extract at a wavelength of 420 nm, as a browning index, using a UV-Vis spectrophotometer,

wherein the obtained extract is then subjected to freeze-drying,
particularly wherein after an appropriate pre-treatment, it is compared with a commercially available reference material at different concentrations.

More particularly, 0,1% w/v and 1,3% w/v aqueous solutions are prepared using certain amounts of melanoidins freeze-dried extract, in addition whereof 0,1% w/v aqueous solution of said commercially available reference material is prepared, and

in that these solutions are compared in terms of their absorbance at a wavelength of 610 nm corresponding to the quality index of said commercially available reference material.

It is emphasized that it is not referred to herewith to a subsequent, fragmentary analysis of the product, but instead, operational control steps of the extraction process itself are defined. The addition of CIE L a b* and ABS420 nm measurements immediately after filtration ensures the repeatability and quality of each batch. The choice of specific wavelengths (420 nm for the melanoidin index and 610 nm for comparison with E150d) provides an immediate, operational indication of successful extraction.

To summarize on the method, the advantages of the method of the invention are the following: the use of probe-type ultrasound technology contributes to the efficient extraction of brown colorants from coffee silver skin in aqueous extract form. In addition, the use of food-grade and environmentally safe materials guarantees the easier application of the extract in food and beverage formulations. Moreover, the absence of use of organic solvents during the process highlights the sustainability of the process.

The present invention also relates to a product obtained by the extraction method as defined above, wherein the values obtained for the set of color coefficients L*, a*, b* and for the absorbance at a wavelength of 420 nm are as follows: (L*) is comprised in a range between 32-40, (a*) between 7 and -13, resp. (b*) between 29 and -35, especially wherein L* = 38 ± 1, a* = 10 ± 1, b* = 33 ± 1 and absorbance (ABS) at 420 nm between 2,1 and 3, in particular 2,7 ± 0,1 respectively.

According to a particular embodiment of the product of the invention, the product obtained by the said extraction method being further subjected to freeze-drying exhibits an absorbance at a wavelength of 610 nm equal to 0,546 ± 0,004 in an aqueous solution of concentration 1,3% w/v.

According to another particular embodiment of the product of the invention, it has comparable absorbance values at a wavelength of 610 nm to those of an aqueous solution of caramel color E150d with a concentration of 0,1% w/v equal to 0,587 ± 0,010.

According to an even more particular embodiment of the product of the invention, the freeze-drying is used to produce an extract powder, which is redissolved, thereby exhibiting caramel color properties, in particular, an aqueous solution of the freeze-dried extract at 1,3% w/v achieving an absorbance value exceeding 0,5 at 610 nm, comparable to a 0,1% w/v solution of commercial E150d, wherein the extract has a plant pigment with targeted properties similar to reference products. This embodiment thus relates to a freeze-dried product that is redissolved at 1,3% w/v, exhibiting an absorbance > 0,5 at 610 nm, i.e. a similar property to caramel color E150d. It is thus a specific technical application of the extract.

According to a further embodiment of the product of the invention, which in an aqueous solution of 1,3 % w/v, measured spectrophotometrically, exhibits an absorption at 420 nm (ABS420 nm) within the range of 2,6-2,8, is compared with caramel color E150d in a solution of 0,1 % w/v, which exhibits an absorption of 0,587 ± 0,010 at 610 nm.

To summarize on the proposed product provided by the invention, the final extract obtained by the method is characterized by a specific spectrophotometric signature, with ABS420 nm = 2,7 ± 0,1 in a 1,3 % w/v solution. None of the cited documents discloses a product with these specific characteristics.

The present invention also relates to a system for identifying a product as defined above, produced by a method proposed above, wherein a set of color coefficients L*, a*, b* thereof is determined in value and the absorbance ABS is determined at a certain wavelength, esp. of about 420 nm.

According to a further embodiment of the system according to the invention, the above referenced process steps produce an aqueous extract of melanoidins, wherein its absorbance is recorded at said wavelength in the UV-VIS spectrum, representing a browning index that is based on the concentration of melanoidins.

According to a further embodiment of the system according to the invention, in addition, said color coefficients are determined using a so-called CIE L*a*b* scale, as indicators of extract quality, after which the aqueous extract of said melanoidins is subjected to freeze-drying generating a dry powder, wherein said dry powder is redissolved in water and the absorption measurement of the new solution is performed at another wavelength esp. of 610 nm, thereby representing an index of color intensity of another material serving as reference.

According to a particular embodiment of the system according to the invention, the following process parameters are determined in said final extract:
- the color coefficients based on the CIE L*a*b* scale, as quality indicators, wherein a colorimeter is used, esp. portable,
- the absorbance of the extract at a wavelength of 420 nm, as a browning index, using a UV-VIS spectrophotometer,

wherein the obtained extract is then subjected to freeze-drying,
particularly wherein after an appropriate pre-treatment, it is compared with a, e.g. commercially available, reference material at different concentrations.

According to another particular embodiment of the system according to the invention, 0,1% w/v and 1,3% w/v aqueous solutions are prepared using certain amounts of melanoidins freeze-dried extract, in addition whereof 0,1% w/v aqueous solution of said commercially available reference material is prepared, and these solutions are compared in terms of their absorbance at a wavelength of 610 nm corresponding to the quality index of said commercially available reference material.

According to a further particular embodiment of the system according to the invention, the said extraction process includes a direct ultrasound process step through which upgraded melanoidins are recovered generating a pigment wherein melanoidins are obtained.

The use of a direct ultrasound process for the said extraction provides an upgraded recovery of melanoidins, esp. through which a pigment is generated after this treatment wherein melanoidins are obtained, by optimizing the ultrasound extraction process, through which the resulting product is upgraded.

There is also proposed according to the invention a use of the product obtained by the extraction method set out above, as a natural brown colorant in food and beverage industries, esp. wherein it is suitable for immediate applications as brown colorant therein, wherein the recovered brown colorants comprising melanoidins, are applied as natural brown colorants in food and beverage industries, similarly to caramel color.

According to a particular embodiment, there is provided the use of the product obtained by the extraction method of the invention, as a natural brown colorant in the food and beverage industries, corresponding to those of the caramel color E-150d, wherein it is incorporated in products of the type comprising cola-type soft drinks, tea drinks and plant-based meat analogues.

There is also provided the use of the product obtained by the extraction method of the invention, for valorization of said product consisting of coffee silver skin that is constituted by a thin piece of coffee beans outer layer, as by-product of roasting, for the recovery of brown colorants as a pigment, wherein silver skin represents a fraction, especially of about 4,2% of the total coffee bean weight, wherein approximately 1 ton of silver skin is produced for every 120 tons of roasted coffee. The utilization of the spermoderm as raw material as a source for melanoidin extraction is a key technical element. Since spermoderm is produced at a rate of ~4,2% of the total weight of coffee beans, its use provides a specific advantage in terms of sufficiency and sustainability on an industrial scale.

To summarize on the proposed uses, the spermoderm extract with a specific spectral/color profile does not exist as an invention. The use features defined above represent specific technical features resp. uses that are not disclosed or suggested in the cited prior art.

In short, an extraction of brown colorants from coffee silver skin is carried out using ultrasound-assisted extraction and water as an environmentally friendly solvent. Extraction efficiency is achieved by optimizing the factors of duration, temperature, amplitude and solvent-to-solid ratio. The characteristics of the final product are determined by the application of optimum conditions during the extraction of brown colorants. The product of the present invention finds applications as a natural brown colorant in food and beverage formulations, as its properties are comparable to commercial caramel color E150d. The use of direct ultrasound technology provides a fast and efficient recovery of melanoidins.

The following parameters are determined in the final extract:
- the color coefficients based on the CIE L*a*b* scale, as quality indicators, advantageously using a portable colorimeter;
- the absorbance ABS of the extract at a wavelength of 420 nm, as a browning index, using a UV-Vis spectrophotometer.

The obtained extract is then subjected to freeze-drying, and after appropriate pre-treatment, it is compared with a commercial caramel color E150d at different concentrations. More specifically:
- 0,1% w/v and 1,3% w/v aqueous solutions are prepared using certain amounts of melanoidins freeze-dried extract. In addition, 0,1% w/v aqueous solution of the commercial caramel color E150d is prepared.
- These solutions are compared in terms of their absorbance at a wavelength of 610 nm corresponding to the quality index of a relevant reference material, caramel color.

The product has absorbance values at a wavelength of 610 nm that are comparable to those of an aqueous solution of caramel color E150d with a concentration of 0,1% w/v equal to 0,587 ± 0,010.

The product is used as a natural brown colorant in food and beverage industries. The resulting product is suitable for immediate applications as brown colorant in food and beverage industries.

The result of this invention may thus have applications as a natural brown colorant in the food and beverage industries, corresponding to those of the caramel color E-150d. The result of the invention could thus be incorporated in various commercial products, including cola-type soft drinks, tea drinks and plant-based meat analogues.

In addition, coffee silver skin is also proposed as a renewable energy material and as a biofuel source, notably. This application sustains the use of a residue from the extraction -not the extract- as a renewable material. Although it is a different direction from the pigment, it is related to the integrated utilization of the same raw material, i.e. spermoderm, which is a desirable advantage of the invention.

Uses of the silver skin in several development stages as discussed above, show the uniqueness of the present invention.

Thanks to the present invention, melanoidins are obtained by optimizing the ultrasound extraction process, through which the resulting product is considerably upgraded, thereby revealing unique, with outstanding properties. The production of a new pigment after this treatment according to the method of the present invention provides the necessary uniqueness elements to the invention. Furthermore, the use of the present product is relevant to the food and cosmetic industries.

### Description

The present invention relates to a method for the production of natural colorant from coffee silver skin comprising the step of extracting brown coloring agents from coffee silver skin, based on the use of ultrasound-assisted extraction and water as a solvent. The result of this invention may have applications as a natural brown colorant in the food and beverage industries, corresponding to those of the caramel color E-150d. The result of the invention could be incorporated in various commercial products, including cola-type soft drinks, tea drinks and plant-based meat analogues.

The extraction of brown colorants from coffee silver skin is carried out employing ultrasound-assisted extraction and water as the solvent extraction. The aforementioned brown colorants from coffee silver skin are called melanoidins, comprising one of the end-products of Maillard reactions, that take place during the roasting of coffee beans. During the ultrasound-assisted extraction, the plant tissues of the coffee silver skin are ruptured, resulting in the release of the melanoidins into the aqueous solution. The determined factors of extraction duration, temperature, amplitude and solvent-to-solid ratio were selected after process optimization and remained constant during the extraction. The process results in an aqueous extract of melanoidins and its absorbance is recorded at 420 nm, in the UV-Vis spectrum, representing a brown index that is based on the concentration of melanoidins. In addition, color coefficients are determined using the CIE L*a*b* scale, as indicators of extract quality. Then, the aqueous extract of melanoidins is subjected to freeze-drying. The resulting dry powder is redissolved in water and the absorption measurement of the new solution at 610 nm is performed. This represents an index of color intensity of caramel color E150d. Finally, the aqueous extract of melanoidins is compared with the corresponding aqueous solution of caramel color E150d.

The present invention focuses on the valorization of coffee silver skin, a thin piece of coffee beans outer layer, which is the most abundant by-product of roasting. Silver skin represents 4,2% of the total coffee bean weight and it is estimated that approximately 1 ton of silver skin is produced for every 120 tons of roasted coffee. Despite being the least abundant of the coffee industry by-products, its availability and ease handling due to the low moisture content have raised the interest regarding its exploitation and application in different sectors. Among other things, coffee silver skin has been proposed as a renewable energy material and as a biofuel source.

Regarding its composition, coffee silver skin contains a large amount of polysaccharides, mainly cellulose, hemicellulose and lignin. Xylose, galactose, arabinose and mannose are the main monosaccharides found in this plant material. Dietary fibers comprise almost 60-80%. In addition, a significant amount of protein (around 18%) along with small percentages of ash and fat have been reported in coffee silver skin. Finally, silver skin is a significant source of bioactive compounds, such as caffeine and polyphenols. Its composition varies depending on the type of coffee beans, their geographical origin and the roasting conditions.

In addition, silver skin is considered an important source of brown colorants, melanoidins, which are heterogenous nitrogen-containing high molecular weight compounds. These compounds are the result of Maillard reactions that take place during the coffee beans roasting process. It is estimated that their concentration in the silver skin ranges from 17% to 23%. Due to the complexity of their structure, not fully ascertained so far, melanoidin extracts cannot be characterized in terms of concentration, so the absorbance of the extracts at 420 nm is used as a browning index representing roughly the amount of melanoidins in the extract.

So far, silver skin is rather valorized for the recovery of bioactive components usually, such as chlorogenic acid and caffeine. Melanoidins extraction from silver skin is not as common, whereas in these cases conventional techniques that require high temperature are employed, thus increasing the process duration and cost. On the other hand, ultrasound-assisted extraction enables the reduction of extraction time, while achieving the necessary high temperature for the extraction of melanoidins just as effectively. Therefore, in the present invention, a direct ultrasound system is used instead, in combination with water at high temperatures, in order to extract the brown colorants of interest. In this method, the advantages of a short and efficient procedure are combined.

Overall, the target here is the valorization of coffee silver skin for the recovery of brown colorants. This is achieved by using direct ultrasound-assisted extraction in aqueous silver skin solution and optimizing process-related factors, such as duration, temperature, amplitude and solvent-to-solid ratio. The recovered brown colorants, melanoidins, can be applied as natural brown colorants in food and beverage industries, similar to caramel color.

The method followed herewith requires as a first step the pulverization of the raw material being silver skin, for particle size reduction and powder recovery. This step is followed by the addition of a certain amount of powder to an aqueous solution with a defined ratio of water-to-silver skin powder, ranging from 100:1 to 1:1 mL/g. The water is pre-heated to 65-80 °C. The intensity of ultrasound pulses (amplitude) during extraction ranges from 50 to 70%. The extraction duration is set to 10 minutes. After the process is completed, the resulting extract is filtered and subjected to centrifugation for solid material removal, so a clear brown extract is obtained.

The following parameters are determined in the final extract:
- the color coefficients based on the CIE L*a*b* scale, as quality indicators, using a portable colorimeter;
- the absorbance of the extract at 420 nm, as a browning index, using a UV-Vis spectrophotometer.

The obtained extract is then subjected to freeze-drying, and after appropriate pre-treatment, it is compared with a commercial caramel color E150d at different concentrations. More specifically:
- 0,1% w/v and 1,3% w/v aqueous solutions are prepared using certain amounts of melanoidins freeze-dried extract.

In addition, 0,1% w/v aqueous solution of the commercial caramel color E150d is prepared;

These solutions are compared in terms of their absorbance at 610 nm (quality index of caramel color).

The advantages of the method are as follows:
the use of probe-type ultrasound technology contributes to the efficient extraction of brown colorants from coffee silver skin in aqueous extract form;
the use of food-grade and environmentally safe materials guarantees the easier application of the extract in food and beverage formulations;
the lack of organic solvents use during the process highlights the sustainability of the process.

The resulting product is suitable for immediate applications as brown colorant in food and beverage industries.

The invention is further set out hereafter in its main features.

The method for the extraction of brown colorants consisting of melanoidins from coffee silver skin uses ultrasound-assisted extraction and water as solvent. In the first stage of the method, coffee silver skin powder is obtained after pulverization. The second stage of the method involves mixing silver skin powder with water in a specific solvent-to-solid ratio. During extraction, the amplitude and temperature parameters remain constant. The final solution is filtered to remove solid residues and the color coefficients L*, a* and b* as well as the absorbance at 420 nm are determined. The values obtained are as follows: L* = 38 ± 1, a* = 10 ± 1, b* = 33 ± 1 and absorbance at 420 nm=2,7 ± 0,1.

Color as a parameter is measured technically by two methods. The first one is chromatometer that gives values in L, a, b and the second is spectrophoscropy that gives values in absorbance. The values given was the values measured in the product.

In particular, the conditions for the extraction of melanoidins are: 10:1 mL/g solvent-to-solid ratio, 50% amplitude, 10 min extraction duration and 75 °C extraction temperature.

More particularly, the use of probe-type ultrasound technology provides a fast and efficient recovery of melanoidins.

The product obtained by said extraction method above presents the following specifications: L* = 38 ± 1, a* = 10 ± 1, b* = 33 ± 1 and absorbance at 420 nm = 2,7 ± 0,1.

In particular, the said product subjected to freeze-drying, then exhibits an absorbance at 610 nm equal to 0,546 ± 0,004 in an aqueous solution of concentration 1,3% w/v.

More particularly, the product obtained by the said extraction method shows comparable absorbance values at 610 nm to those of an aqueous solution of caramel color E150d with a concentration of 0,1% w/v equal to 0,587 ± 0,010.

In the end, the product obtained by the extraction method and having the characteristics above, can be used as a natural brown colorant in food and beverage industries.

The extraction of brown colorants from coffee silver skin is thus carried out using ultrasound-assisted extraction and water as an environmentally friendly solvent. Extraction efficiency is achieved by optimizing the factors of duration, temperature, amplitude and solvent-to-solid ratio.

The characteristics of the final product are determined by the application of optimum conditions during the extraction of brown colorants. The product of the present invention may find applications as a natural brown colorant in food and beverage formulations, as its properties are comparable to commercial caramel color E150d.

In summary, the method for the production of natural colorant from coffee silver skin comprises the extraction of brown colorants from coffee silver skin is carried out using ultrasound-assisted extraction and water as an environmentally friendly solvent. Extraction efficiency is achieved by optimizing the factors of duration, temperature, amplitude and solvent-to-solid ratio. The characteristics of the final product are determined by the application of optimum conditions during the extraction of brown colorants. The product of the present invention may find applications as a natural brown colorant in food and beverage formulations, as its properties are comparable to commercial caramel color E150d.

For illustrative purposes of the present invention, the following examples are set forth hereafter.

### Example 1

Coffee silver skin powder is dispersed in water (75°C) at a solvent-to-solid ratio of 10:1 mL/g. Ultrasound-assisted extraction is performed at an amplitude of 50%. The process is completed after 10 minutes. At this stage, the resulting solution is filtered to remove insoluble components. The color coefficients L*, a* and b* and absorbance at a wavelength of 420 nm (brown index) are determined in the extract by measuring thereof. Table 1 shows the values of the measured color coefficients L*, a* and b* as well as the absorbance at 420 nm of the resulting extract.

**Table 1**

| **Parameter** | **Value** |
|---|---|
| L* | 38 ± 1 |
| a* | 10 ± 1 |
| b* | 33 ± 1 |
| Absorbance at 420 nm | 2,7 ± 0,1 |

This table 1 shows that the invention significantly improves the efficiency and reliability of ultrasonic extraction. The process achieves extraction within 10 minutes, yielding an extract with measurable color characteristics, as evidenced by the provided L*, a*, b* values and absorbance at 420 nm. This demonstrates the potential usefulness of the extract as a plant pigment. Furthermore, the invention utilizes a by-product of coffee processing, thus valorizing same. The method thus offers substantial improvements over existing techniques, highlighting its industrial applicability.

### Example 2

Coffee silver skin extract is subjected to freeze-drying. The resulting dry powder is redissolved in water and the aqueous solution is investigated for its ability to give an absorbance > 0,5 at a wavelength of 610 nm (caramel color quality index). Aqueous extract solution > 1,3% w/v gives absorbance values > 0,5. Aqueous extract solution and caramel color solution of 0,1% w/v give absorbance values > 0,03 and > 0,5, respectively.

Table 2 below shows the comparison of the 3 solutions.

**Table 2**

| **Solution** | **Absorbance at 610 nm** |
|---|---|
| 0,1% w/v freeze-dried melanoidins extract | 0,03 ± 0,005 |
| 1,3% w/v freeze-dried melanoidins extract | 0.54 ± 0,005 |
| 0,1% w/v caramel color E150d | 0,58 ± 0,005 |

The conclusions therefrom show that the invention effectively uses freeze-drying technique to produce a stable extract powder, which, when redissolved, exhibits significant caramel color properties. In particular, an aqueous solution of the freeze-dried extract at 1,3% w/v achieves an absorbance value exceeding 0,5 at 610 nm, comparable to a 0,1% w/v solution of commercial E150d. This suggests the potential of the extract as a plant pigment with desirable properties similar to commercial products. The detailed absorbance values provided in Table 2 document the efficacy of the extract, highlighting the potential applicability of the innovation to industries requiring plant pigments.

### References

Arya, S. S., Venkatram, R., More, P. R., & Vijayan, P. (2022). The wastes of coffee bean processing for utilization in food: a review. Journal of Food Science and Technology, 59(2), 429-444. https://doi.org/10.1007/s13197-021-05032-5
Bondam, A. F., Diolinda da Silveira, D., Pozzada dos Santos, J., & Hoffmann, J. F. (2022). Phenolic compounds from coffee by-products: Extraction and application in the food and pharmaceutical industries. Trends in Food Science and Technology, 123(February), 172-186. https://doi.org/10.1016/j.tifs.2022.03.013
Garcia, C. V., & Kim, Y. T. (2021). Spent Coffee Grounds and Coffee Silverskin as Potential Materials for Packaging: A Review. Journal of Polymers and the Environment, 29(8), 2372-2384. https://doi.org/10.1007/s10924-021-02067-9
Fučkar, V. B., Nutrizio, M., Grudenid, A., Ðjekić, I., & Jambrak, A. R. (2023). Sustainable Ultrasound Assisted Extractions and Valorization of Coffee Silver Skin (CS). Sustainability, 15(10), 8198. https://doi.org/10.3390/su15108198
Zhang, Z., Poojary, M. M., Choudhary, A., Dilip, K., Lund, M. N., & Tiwari, B. K. (2020). Ultrasound processing of coffee silver skin, brewer's spent grain and potato peel wastes for phenolic compounds and amino acids: a comparative study. Journal of Food Science and Technology, 58(6), 2273-2282. https://doi.org/10.1007/s13197-020-04738-250d.

## Claims

1. Method for producing a natural colorant from coffee silver skin comprising the extraction of brown coloring agents consisting of melanoidins, from raw material consisting of coffee silverskin of coffee beans, carried out with a predetermined set of process parameters, wherein said silverskin is mixed with solvent means which generates a solution,
and said solution thus obtained is filtered, wherein solid residues are removed,
**characterized in that** an ultrasound-assisted extraction is carried out with a solvent means, esp. environmentally friendly, which is selected as water, according to the following steps wherein:
- a first step consists of a pulverization of said coffee silver skin yielding a particle size reduction through which coffee silverskin powder is obtained,
- in a further step, said silverskin powder is mixed with said solvent means according to a specific solvent-to-solid ratio, which generates an aqueous solution,
- whereas during extraction, said process parameters comprising the amplitude and temperature are kept constant,
- **in that** the abovementioned process steps produce an aqueous extract of melanoidins which is yielded by the abovementioned process steps;
- esp. further comprising a determination step wherein a set of color coefficients (L*, a*, b*) thereof is determined in value, and the absorbance (ABS) is determined at a certain wavelength (λ), esp. of about 420 nm, wherein measurements of color factors and absorbance at 420 nm are incorporated as an integral part of the extraction method, wherein the measurement of these indicators consisting of said color factors is performed during or right after said filtration step.

2. Extraction method according to claim 1, wherein said coffee silverskin has plant tissues contained in said coffee beans, **characterized in that** said coffee beans are roasted, thereby generating so-called Maillard reactions, wherein said brown colorants comprise one of the end-products of said Maillard reactions,
**in that** during said ultrasound-assisted extraction, the vegetative tissues of the coffee silverskin are ruptured, resulting in the release of the melanoidins into said aqueous solution,
**in that** the extraction process parameters, further also comprising duration and solvent-to-solid ratio, are determined and selected after process completion, wherein they are kept constant during the extraction,
and **in that** the abovementioned process steps produce an aqueous extract of melanoidins, wherein its absorbance is recorded at said wavelength (λ) in the UV-VIS spectrum, representing a browning index that is based on the concentration of melanoidins.

3. Method according to claim 2, **characterized in that** in addition, said color coefficients are determined using a so-called CIE L*a*b* scale, as indicators of extract quality, after which the aqueous extract of said melanoidins is subjected to freeze-drying generating a dry powder, wherein said dry powder is redissolved in water,
and the absorption measurement of the new solution is performed at another wavelength esp. of 610 nm, representing an index of color intensity of another material serving as reference.

4. Method according to one of the claims 1 to 3, **characterized in that** said pulverization with powder recovery is followed by the addition of a certain amount of powder to an aqueous solution with a defined ratio of water-to-silverskin powder, **in that** the water is pre-heated, **in that** ultrasound pulses are applied with a certain amplitude during extraction, **in that** the extraction duration is set, and **in that** after the process is thus completed, the resulting extract is filtered and subjected to centrifugation under the action whereof solid material is removed, yielding a final extract consisting of a clear brown extract.

5. Method according to claim 4, **characterized in that** said pulverization with powder recovery is followed by the addition of the amount of powder to an aqueous solution with a defined ratio of water-to-silverskin powder ranging from 100:1 to 1:1 mL/g,
**in that** the water is pre-heated up to 65-80°C,
**in that** ultrasound pulses are applied with the amplitude during extraction the intensity whereof is set to range from 50 to 70%,
**in that** the extraction duration is set to about 10 minutes,
particularly wherein the conditions for said process parameters of the extraction of melanoidins are: 10:1 mL/g solvent-to-solid ratio, 50% amplitude, 10 min extraction duration and 75°C extraction temperature;
more particularly wherein the extraction includes a direct ultrasound process step through which upgraded melanoidins are recovered generating a pigment wherein melanoidins are obtained.

6. Product obtained by the extraction method as defined in any one of the claims 1 to 5, **characterized in that** the values obtained for the set of color coefficients (L*, a*, b*) and for the absorbance at a wavelength of 420 nm are as follows:
(L*) is comprised in a range between 32-40, (a*) between 7 and -13, resp. (b*) between 29 and -35, esp. wherein L* = 38 ± 1, a* = 10 ± 1, b* = 33 ± 1 and absorbance (ABS) at 420 nm between 2,1 and 3, in particular 2,7 ± 0,1 respectively.

7. Product according to the preceding claim 6, **characterized in that** it has the following specifications for the said set of color coefficients (L*, a*, b*) and for the absorbance at a wavelength of 420 nm wherein: (L*) is comprised in a range between 32-40, (a*) between 7 and -13, resp. (b*) between 29 and -35, esp. wherein L* = 38 ± 1, a* = 10 ± 1, b* = 33 ± 1 and absorbance (ABS) at 420 nm between 2,1 and 3, in particular 2,7 ± 0,1 respectively.

8. Product according to claim 6 or 7 obtained by the extraction method of one of the claims 1 to 5 being subjected to freeze-drying, **characterized in that** it exhibits an absorbance at a wavelength of 610 nm equal to 0,546 ± 0,004 in an aqueous solution of concentration 1,3% w/v.

9. Product according to one of the claims 6 to 8 obtained by the extraction method of one of the claims 1 to 5, **characterized in that** it has comparable absorbance values at a wavelength of 610 nm to those of an aqueous solution of caramel color E150d with a concentration of 0,1% w/v equal to 0,587 ± 0,010.

10. Product according to claim 8 or 9, wherein said freeze-drying produces an extract powder, which is redissolved, thereby exhibiting caramel color properties, in particular, an aqueous solution of the freeze-dried extract at 1,3% w/v achieving an absorbance value exceeding 0,5 at 610 nm, comparable to a 0,1% w/v solution of E150d, wherein the extract as a plant pigment is provided with targeted properties similar to reference products.

11. System for identifying a product as defined in any of the claims 6 to 10, produced by a method according to any one of the claims 1 to 6, **characterized in that** a set of color coefficients (L*, a*, b*) thereof is determined in value and the absorbance (ABS) is determined at a certain wavelength (λ), esp. of about 420 nm.

12. System according to the preceding claim 11, **characterized in that** the above referenced process steps produce an aqueous extract of melanoidins, wherein its absorbance is recorded at said wavelength (λ) in the UV-VIS spectrum, representing a browning index that is based on the concentration of melanoidins.

13. System according to claim 11 or 12, **characterized in that** in addition, said color coefficients are determined using a so-called CIE L*a*b* scale, as indicators of extract quality, after which the aqueous extract of said melanoidins is subjected to freeze-drying generating a dry powder, **in that** said dry powder is redissolved in water and the absorption measurement of the new solution is performed at another wavelength esp. of 610 nm, thereby representing an index of color intensity of another material serving as reference.

14. System according to one of the claims 11 to 13, **characterized in that** the following parameters are determined in said final extract:
- the color coefficients based on the CIE L*a*b* scale, as quality indicators, wherein a colorimeter is used, esp. portable,
- the absorbance of the extract at a wavelength of 420 nm, as a browning index, using a UV-VIS spectrophotometer,
wherein the obtained extract is then subjected to freeze-drying,
particularly wherein after a pre-treatment, it is compared with a reference material at different concentrations.

15. System according to one of the claims 11 to 14, **characterized in that** 0,1% w/v and 1,3% w/v aqueous solutions are prepared using certain amounts of melanoidins freeze-dried extract, in addition whereof 0,1% w/v aqueous solution of said reference material is prepared, and
**in that** these solutions are compared in terms of their absorbance at a wavelength of 610 nm corresponding to the quality index of said reference material.

16. System according to one of the claims 11 to 15, **characterized in that** the product obtained by the method of Claims 1-5, which in an aqueous solution of 1,3 % w/v, is measured spectrophotometrically, exhibits an absorption at 420 nm (ABS420 nm) within the range of 2,6-2,8, and is compared with caramel color E150d in a solution of 0,1 % w/v, which exhibits an absorption of 0,587 ± 0,010 at 610 nm.

17. Use of the product according to one of the claims 6 to 10 obtained by the extraction method of one of the claims 1 to 5, as a natural brown colorant in food and beverage industries, esp. wherein it is suitable for immediate applications as brown colorant therein, wherein the recovered brown colorants comprising melanoidins, are applied as natural brown colorants in food and beverage industries, similarly to caramel color; more particularly corresponding to those of the caramel color E150d, wherein it is incorporated in products of the type comprising cola-type soft drinks, tea drinks and plant-based meat analogues.

18. Use of the product according to one of the claims 6 to 10 obtained by the extraction method of one of the claims 1 to 5, for valorization of said product consisting of coffee silver skin that is constituted by a thin piece of coffee beans outer layer, as by-product of roasting, for the recovery of brown colorants as a pigment, wherein silver skin represents a fraction, esp. of about 4,2% of the total coffee bean weight, wherein approximately 1 ton of silver skin is produced for every 120 tons of roasted coffee.
